# EUROPÄISCHE PATENTANMELDUNG

(11) **EP 4 461 986 A1**
(43) Veröffentlichungstag der Anmeldung: **13.11.2024**
(21) Anmeldenummer: 23214991.4
(22) Anmeldetag: 07.12.2023
(51) Int. Cl.: F16F 9/32, F16F 9/10, F16F 9/52, F16F 9/19, F16F 9/516, B62J 45/41, B62K 3/00, B62K 21/20, B62K 25/04, F16F 9/20, B60G 17/00

(54) **STOSSDÄMPFER**

(30) Priorität: 08.05.2023 DE 202023102485 U
(71) Anmelder: Driveman GmbH, 58339 Breckerfeld (DE)
(72) Erfinder: Schnippering, Axel, 58339 Breckerfeld (DE); Wiegand, Andreas, 58579 Schalksmühle (DE)
(74) Vertreter: Patentanwälte Dörner & Kötter PartG mbB

(57) **Zusammenfassung**

Die Erfindung betrifft einen Stoßdämpfer, umfassend einen mit einem Fluid befüllten Zylinder (1) und eine in diesem geführten Kolbenstange (3), wobei die Kolbenstange (3) in den Zylinder (1) hinein oder durch ihn hindurchgeführt ist und mit wenigstens einem Kolben (4, 62) versehen ist, wobei in dem Zylinder (1) den wenigstens einen Kolben (4, 62) umgebend wenigstens eine Dämpferhülse (2) angeordnet ist, deren Außendurchmesser kleiner ist, als der Innendurchmesser des Zylinders (1) und deren Innendurchmesser größer ist, als der Außendurchmesser des wenigstens einen Kolbens (4, 62), wodurch zwischen dem wenigstens einen Kolben (4, 62) und der wenigstens einen Dämpferhülse (2) ein Ringspalt gebildet ist und zwischen der wenigstens einen Dämpferhülse (2) und dem Zylinder (1) ein Mantelspalt gebildet ist, und wobei wenigstens eine der wenigstens einen Dämpferhülse (2) aus Kunststoff hergestellt ist.

## Beschreibung

Die Erfindung betrifft einen Stoßdämpfer nach dem Oberbegriff des Patentanspruchs 1

Stoßdämpfer kommen beispielsweise bei Fahrwerken von Radfahrzeugen im Verbund mit einer Federung zum Einsatz, um Schwingungen der gefederten Masse zu dämpfen und dadurch schnell abklingen zu lassen. Korrekter wäre die Bezeichnung "Schwingungsdämpfer", da nicht der Stoß selbst, sondern dessen Wirkung beeinflusst wird. Stoßdämpfer dienen nicht dem Abfangen von Fahrbahnunebenheiten ins Fahrzeug eingeleiteten Stößen; die Aufgabe kommt der Federung zu. Stoßdämpfer haben die Aufgabe, Schwingungen des Fahrzeugaufbaus auf die Tragfederung oder auch Schwingungen der Räder auf die Reifenfederung zu dämpfen. Stoßdämpfern werden darüber hinaus in den unterschiedlichsten Bereichen eingesetzt, beispielsweise auch zur Schwingungsdämpfung von Maschinen oder Maschinenteilen, aber auch beispielweise im Möbelbau zum Dämpfen von Klappenbewegungen.

Bei Fahrzeugen liegt die primäre Aufgabe einer Feder innerhalb der Federung darin, der Masse des Fahrzeugaufbaus und des Fahrers entgegenzuwirken. Bei Zweiradfahrzeugen kommen regelmäßig Spiralfedern zum Einsatz. Die Federkraft einer Spiralfeder weist im Regelfall einen linearen Verlauf zum eingefederten Weg auf. Sie befindet sich zu Beginn einer Belastung in einem Ruhezustand und trägt das Gewicht von Fahrzeug und Fahrer. Eine niedrige Federkonstante (Federrate) sorgt für ein komfortables Fahrgefühl. Während des Federweges erhöht sich die Federkraft. Eine niedrige und komfortable Federkonstante ermöglicht aber ein schnelles und einfaches Durchschlagen. Eine hohe Federkonstante hingegen verringert das Durchschlagen, verschlechtert aber den Fahrkomfort. Leichte bis mittlere Stöße durch Straßenunebenheiten werden durch eine höhere Federkonstante weniger absorbiert, und über das Fahrzeug an den Fahrer durchgeleitet. Der Negativfederweg (Zugstufe), ergibt sich durch die Auflastung von Fahrer und Fahrzeug. Eine weitere Einfederung (Druckstufe) erfolgt durch die Einwirkungen der Fahrbahnunebenheiten. Über die Einstellung der Vorspannung der Spiralfeder kann das Fahrergewicht angepasst werden.

Durch eine Auslegung eines Stoßdämpfers in Zugrichtung und in Druckrichtung kann die Fahrdynamik und damit der Fahrkomfort beeinflusst werden. Innerhalb der Zugstufe eines Stoßdämpfers wird eine Fahrzeugfederung in dem Entspannungsvorgang innerhalb einer Schwingung gedämpft. In der Druckstufe erfolgt eine Dämpfung der Einfedergeschwindigkeit.

Stoßdämpfer sind im Fahrzeugbereich regelmäßig hydraulische Teleskopstoßdämpfer. Diese beruhen auf dem Prinzip, dass die Widerstandskraft gegen das Fließen des verdrängten Öls von der Fließgeschwindigkeit abhängt. In dem Stoßdämpfer wird Hydrauliköl über einen Kolben durch enge Bohrungen und Ventilsysteme gepresst. Die Dämpfungskraft, die der Dämpfergeschwindigkeit entgegenwirkt, steigt mit zunehmender Ein- bzw. Ausfedergeschwindigkeit des Kolbens progressiv an.

Nachteilig an den vorbekannten hydraulischen Stoßdämpfern (die, wie oben ausgeführt tatsächlich Schwingungsdämpfer sind) ist, dass diese in einer Feder-Dämpfer-Anordnung die Stoßdämpfungswirkung der Feder in ihrem freischwingenden Mittelbereich durch ihre Schwingungsdämpfung beeinträchtigen. Dabei ist die Beeinträchtigung abhängig von der Geschwindigkeit des Kolbens.

Zur Behebung dieser Problematik wird in der DE 20 2023 102 485 U1 ein Stoßdämpfer vorgestellt, bei dem eine Beeinträchtigung der Stoßdämpfungswirkung einer angeordneten Federung in ihrem freischwingenden Mittelbereich vermieden ist. Hierzu ist in einem Zylinder eine Kolbenstange angeordnet, die durch diesen hindurchgeführt ist und die mit zwei beabstandet zueinander angeordneten Kolben versehen ist, in die umlaufend radial beabstandet zu der Kolbenstange Axialbohrungen eingebracht sind. An der jeweiligen Außenseite der Kolben ist jeweils eine Verschlussscheibe zum Verschließen der Axialbohrungen des zugeordneten Kolbens auf der Kolbenstange axial beweglich gelagert. Die Zylinderinnenwand weist zumindest bereichsweise einen sich in Axialrichtung stetig ändernden Durchmesser auf, wodurch eine wegabhängige Dämpfung bewirkt ist, über die eine Minimierung der Schwingungsdämpfung im freischwingenden Mittelbereich einer Federung ermöglicht ist. Dieser Stoßdämpfer hat sich in der Praxis bewährt und ermöglicht erstmals eine wegabhängige Dämpfung mit einer weitgehend ungedämpften Nulllage.

Beim Einsatz eines solchen Stoßdämpfers hat sich jedoch gezeigt, dass bei hoher Belastung des Stoßdämpfers sowie bei unterschiedlichen Temperaturbedingungen Änderungen des Dämpfungsverhaltens auftreten können.

Hier will die Erfindung Abhilfe schaffen. Der Erfindung liegt die Aufgabe zu Grunde einen Stoßdämpfer der vorstehenden Art bereitzustellen, bei dem auch bei hoher Arbeitsleistung sowie bei unterschiedlichen Temperaturen ein im Wesentlichen gleichbleibendes Dämpfungsverhalten vorliegt. Gemäß der Erfindung wird diese Aufgabe durch einen Stoßdämpfer mit den Merkmalen des kennzeichnenden Teils des Patentanspruchs 1 gelöst.

Überraschend hat sich gezeigt, dass sich durch eine intensive Schwingbelastung die Arbeitstemperatur im Dämpferzylinder erhöht, was sowohl zu einer signifikanten Veränderung der Viskosität und damit des Fließverhaltens des Fluids führt, als auch dazu, dass Materialien von Kolben, Dämpferhülse und Zylinder aufgrund ihres spezifischen Temperaturausdehnungsverhaltens maßgeblich das Dämpfungsverhalten beeinflussen. Die Temperatur des Stoßdämpfers wird zusätzlich durch eine Änderung der Umgebungstemperatur beeinflusst.

Dadurch, dass in dem Zylinder den wenigstens einen Kolben umgebend wenigstens eine Dämpferhülse angeordnet ist, deren Außendurchmesser kleiner ist, als der Innendurchmesser des Zylinders und deren Innendurchmesser größer ist, als der Außendurchmesser des wenigstens einen Kolbens, wodurch zwischen dem wenigstens einen Kolben und der wenigstens einen Dämpferhülse ein Ringspalt gebildet ist und wodurch zwischen der wenigstens einen Dämpferhülse und dem Zylinder ein Mantelspalt gebildet ist, ist beidseitig des Querschnitts der Dämpferhülse zusätzlicher Raum für das Ausdehnungsverhalten der Materialien von Kolben, Dämpferhülse und Zylinder bereitgestellt. Darüber hinaus tragen der Mantelspalt und der Ringspalt zum Dämpfungsverhalten bei, bei dem bei steigender Kolbengeschwindigkeit ab einem gewissen Wert die Geschwindigkeitsabhängigkeit in eine Wegabhängigkeit übergeht. Dadurch, dass wenigstens eine der wenigstens einen Dämpferhülse aus Kunststoff ausgebildet ist, ist eine Elastizität der wenigstens einen Dämpferhülse erzielt. Bei steigender Kolbengeschwindigkeit steigt der Druck vor dem Kolben in der Dämpferhülse, was bedingt durch die Elastizität der wenigstens einen Dämpferhülse aus Kunststoff zur Aufweitung des Kolben- bzw. Ringspaltes führt und gleichzeitig zur Verkleinerung des Mantelspaltes, der hierfür genügend Raum bietet.

Durch den so vergrößerten Ringspalt kann das komprimierte Fluid leichter abfließen. Bei geeigneter Wahl der Materialelastizität (E-Modul Wert des Kunststoffes) funktioniert die Dämpferhülse wie ein Überdruckventil - der Dämpfer verliert seine Abhängigkeit von der Geschwindigkeit und nimmt nahezu eine reine Wegeabhängigkeit an.

Durch die Elastizität des Kunststoffes, vorgegeben durch die mechanischen Materialeigenschaften des zugehörigen E-Modul Wertes, ist eine druckabhängige Vergrößerung des Ringspaltes zwischen Kolben und Dämpferhülse einstellbar. Wenn die Dämpferhülse aus mehreren Dämpferhülsenteilen gebildet ist, sind durch die Verwendung unterschiedlicher Kunststoffe mit verschiedenen E-Modul Werten der Dämpferhülsenteile weitere unterschiedliche Dämpfereigenschaften in Zug- und Druckstufe erzielbar.

In Weiterbildung der Erfindung sind der wenigstens eine Kolben und die wenigstens eine Dämpferhülse aus Werkstoffen mit unterschiedlichem Wärmeausdehnungskoeffizienten ausgebildet. Hierdurch ist die temperaturbedingte Materialausdehnung von Kolben und Hülse einstellbar, wodurch wiederum der zwischen der Innenmantelfläche der Hülse und der Außenmantelfläche des wenigstens einen Kolbens gebildete Ringspalt über die Temperatur einstellbar ist. Beispielsweise können für den Kolben einerseits und die Hülse andererseits Werkstoffe gewählt werden, deren Wärmeausdehnungskoeffizienten derart unterschiedlich sind, dass die resultierende Änderung des Ringspaltes einen entgegenwirkenden Einfluss auf das temperaturabhängige Fließverhalten des Fluids bewirkt. Der somit über den Temperaturbereich gebildete kleiner werdende Ringspalt wirkt der durch abnehmende Viskosität zunehmenden Fließfähigkeit des Fluids entgegen.

Bei höheren Temperaturen ist der Ringspalt kleiner und die Viskosität des Fluids nimmt ab, bei niedrigen Temperaturen ist der Ringspalt größer und die Viskosität des Fluids nimmt zu. Durch eine geeignete Wahl von Kunststoffmaterialien mit unterschiedlichen Temperaturausdehnungskoeffizienten für Kolben und Dämpferhülse und eines dazu geeigneten Fluids mit hohem Viskositätsindex, beispielsweise ein HVLP Hydrauliköl gemäß DIN 51524-3:2017-06 oder ein Silikonöl, ist ein gleichbleibendes Dämpferverhalten über einen weiten Temperaturbereich erzielbar.

Ein erster Aspekt der vorliegenden Erfindung ist eine druckabhängige Vergrö-ßerung des Ringspaltes zwischen Kolben und Dämpferhülse, wodurch einem ansteigenden Druck entgegengewirkt ist. Ein weiterer Aspekt der Erfindung ist die Beeinflussung der für einen Druckanstieg ursächlichen temperaturabhängigen Änderung des Ringspaltes durch die Verwendung von unterschiedlichen Werkstoffen mit unterschiedlichen Wärmeausdehnungskoeffizienten für Hülse und Kolben.

In Weiterbildung der Erfindung ist die wenigstens eine Dämpferhülse und/oder der wenigstens eine Kolben aus Kunststoff, vorzugsweise aus einem thermoplastischen Kunststoff hergestellt. Hierdurch sind vielfältige Einstellungsmöglichkeiten der temperaturabhängigen Ausdehnungen gegeben.

In Ausgestaltung der Erfindung ist der wenigstens eine Kolben und/oder die wenigstens eine Hülse aus Polyamid, vorzugsweise aus glasfaserverstärktem Polyamid hergestellt. Hierdurch ist eine große thermische Ausdehnung bei gleichzeitig hoher mechanischer Belastbarkeit erzielt. Gute Ergebnisse lassen sich erzielen, wenn der wenigstens eine Kolben aus PA66 oder die wenigstens eine Hülse aus PA6, bevorzugt aus PA6GF30 hergestellt ist.

Ein anderes Dämpfungsverhalten ist dadurch erzielbar, dass der Kolben aus Metall, vorzugsweise aus Aluminium und die Dämpferhülse aus Kunststoff, vorzugsweise aus Polyamid hergestellt ist. Dadurch, dass die thermische Ausdehnung von Kunststoffen sowie deren Elastizität erheblich größer ist, als die von Metallen, ist durch eine solche Kombination ein ungleiches Ausdehnungsverhalten von Kolben und Hülse erzielt, wodurch sich ein spezifisches Ringspaltänderungsverhalten und damit ein spezifisches Dämpfungsverhalten des Stoßdämpfers über einen Temperaturbereich ergibt.

In Weiterbildung der Erfindung sind in den wenigstens einen Kolben umlaufend radial beabstandet zu der Kolbenstange Axialbohrungen eingebracht, wobei an wenigstens einer Außenseite des wenigstens einen Kolbens eine Verschlussscheibe zum Verschließen der Axialbohrungen auf der Kolbenstange axial beweglich gelagert ist. Hierdurch ist eine veränderte Fluidverdrängung des wenigstens einen Kolbens in einer Richtung erzielbar.

In Weiterbildung der Erfindung ist in dem zwischen dem Zylinder und der wenigstens einen Dämpferhülse gebildeten Mantelspalt wenigstens ein Druckausgleichselement angeordnet. Alternativ oder zusätzlich kann in dem Zylinder eine Druckausgleichskammer vorhanden sein, die mit dem Fluid in Kontakt ist und in der ein Druckausgleichselement angeordnet ist. Weiterhin kann alternativ oder zusätzlich zwischen zwei auf der Kolbenstange beabstandet zueinander vorhandenen Kolben ein Druckausgleichselement angeordnet sein.

In Ausgestaltung der Erfindung ist das wenigstens eine Druckausgleichselement aus Elastomerschaum, Moosgummi oder Zellkautschuk hergestellt. Diese Materialien weisen Hohlräume auf, die bei äußerer Druckeinwirkung zusammengedrückt werden, wodurch das Volumen des Druckausgleichselements vermindert wird.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Dabei kommen gleichen Teilen gleiche Bezugsziffern zu. Es zeigen:
- Figur 1:: die schematische Darstellung eines Stoßdämpfers im ausgefahrenen Zustand
a) in einer Seitenansicht;
b) in einer transparenten Darstellung;
c) im Längsschnitt;
- Figur 2:: die schematische Darstellung des Stoßdämpfers aus Figur 1 im eingefahrenen Zustand
a) in einer Seitenansicht;
b) in einer transparenten Darstellung;
c) im Längsschnitt;
- Figur 3:: die schematische Darstellung des Stoßdämpfers aus Figur 1 in Mittelstellung
a) in einer Seitenansicht;
b) in einer transparenten Darstellung;
c) im Längsschnitt;
- Figur 4:: die schematische Darstellung eines Stoßdämpfers in einer weiteren Ausführungsform im ausgefahrenen Zustand
a) in einer Seitenansicht;
b) in einer transparenten Darstellung;
c) im Längsschnitt;

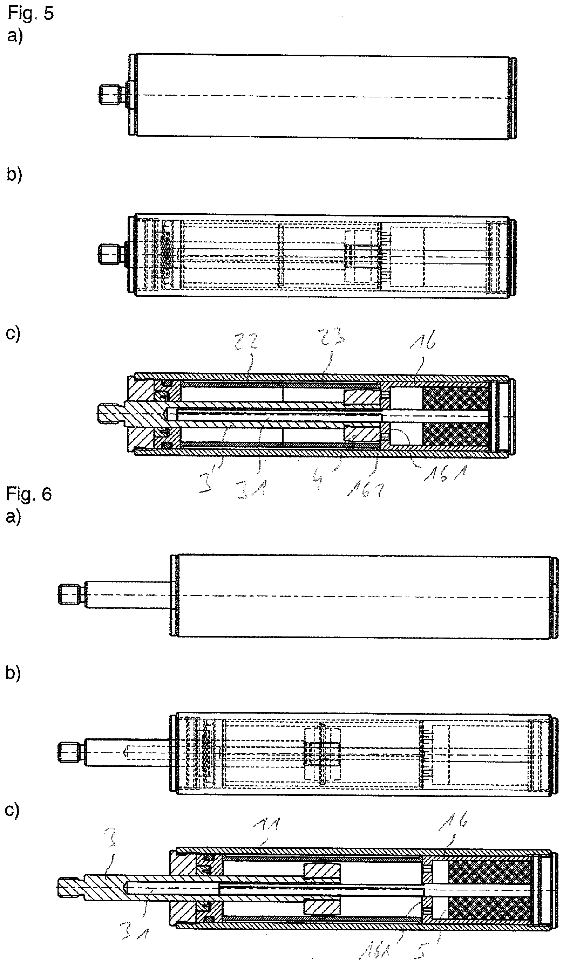

- Figur 5:: die schematische Darstellung des Stoßdämpfers aus Figur 4 im eingefahrenen Zustand
a) in einer Seitenansicht;
b) in einer transparenten Darstellung;
c) im Längsschnitt;
- Figur 6:: die schematische Darstellung des Stoßdämpfers aus Figur 4 in Mittelstellung
a) in einer Seitenansicht;
b) in einer transparenten Darstellung;
c) im Längsschnitt;
- Figur 7:: die schematische Darstellung eines Stoßdämpfers in einer dritten Ausführungsform
a) in einer Seitenansicht;
b) in einer transparenten Darstellung;
c) im Längsschnitt;
- Figur 8:: die Darstellung von Zustandsänderungskurven eines Stoßdämpfers gemäß Figuren 1 bis 7 mit einem Kolben aus AL6061 und einer Hülse aus PA6GF30 bei Arbeitstemperaturen von -20°C und 60°C
a) der Viskosität des Hydrauliköls HVLP32;
b) der Ringspaltfläche zwischen Kolben- und Hülse;
c) der Dämpferkraft des Stoßdämpfers;
- Figur 9:: die Darstellung von Zustandsänderungskurven eines Stoßdämpfers gemäß Figuren 1 bis 7 mit einem Kolben und einer Hülse aus identischen Werkstoffen (PA6GF30) bei Arbeitstemperaturen von -20°C und 60°C
a) der Viskosität des Hydrauliköls HVLP32;
b) der Ringspaltfläche zwischen Kolben- und Hülse;
c) der Dämpferkraft des Stoßdämpfers;
- Figur 10:: die Darstellung von Zustandsänderungskurven eines Stoßdämpfers gemäß Figuren 1 bis 7 mit einem Kolben aus PA66 und einer Hülse aus PA6GF30 bei Arbeitstemperaturen von -20°C und 60°C
a) der Viskosität des Hydrauliköls HVLP32;
b) der Ringspaltfläche zwischen Kolben- und Hülse;
c) der Dämpferkraft des Stoßdämpfers;

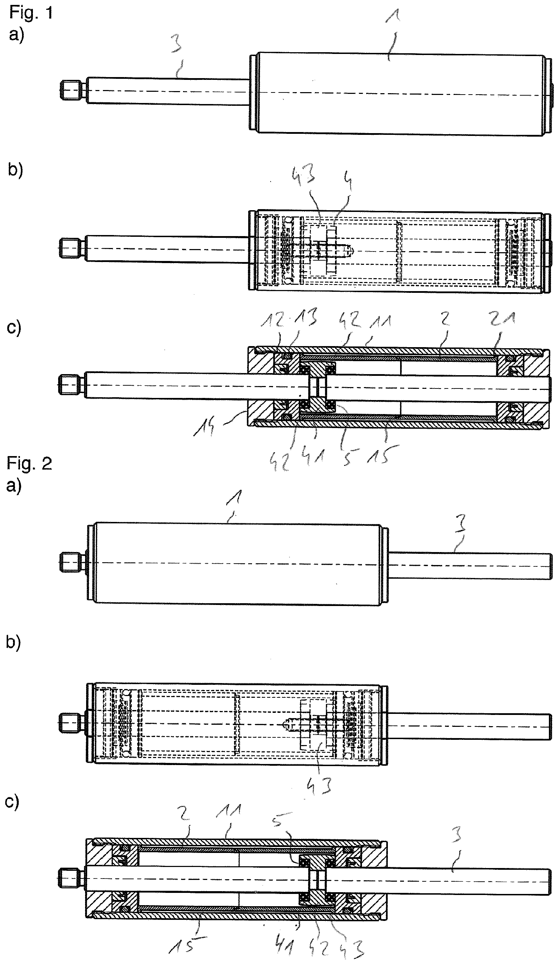

Der als Ausführungsbeispiel gemäß Figur 1 gewählte Stoßdämpfer umfasst einen mit einem Fluid, vorliegend einem Hydrauliköl HVLP 32, gefüllten Zylinder 1, in den eine Dämpferhülse 2 eingebracht ist, durch die eine Kolbenstange 3 verschiebbar geführt ist. Auf der Kolbenstange 3 ist ein Kolben 4 angeordnet.

Der Zylinder 1 umfasst ein Zylinderrohr 11, das an beiden Enden jeweils mit einem Dichtungs- und Führungspaket 12 verschlossen ist, das über einen O-Ring 13 gegenüber dem Zylinderrohr 11 abgedichtet ist. Die beiden Dichtungs- und Führungspakete 12 sind jeweils über ein Verschlussstück 14 axial in dem Zylinderrohr 11 fixiert. Zwischen den beidseitig angeordneten Dichtungs- und Führungspaketen 12 ist die Dämpferhülse 2 in dem Zylinderrohr 11 axial gehalten.

Die Dämpferhülse 2 ist im Ausführungsbeispiel aus einem thermoplastischen Kunststoff, vorliegend Polyamid hergestellt. Der Außendurchmesser der Dämpferhülse 2 ist etwa 2 Prozent geringer gegenüber dem Innendurchmesser des Zylinderrohres 11, wodurch zwischen dem Zylinderrohr 11 und der Dämpferhülse 2 ein Mantelspalt 15 gebildet ist. Die Dämpferhülse 2 ist so axial fixiert schwimmend in dem Zylinderrohr 11 gehalten. Im Ausführungsbeispiel weist die Dämpferhülse 2 an ihren beiden Enden jeweils einen nach außen kragenden umlaufenden Kragen 21 auf, mit dem sich die Dämpferhülse 2 radial gegen das Zylinderrohr 11 abstützt. Der Kolben 4 weist einen zylindrischen Abschnitt 41 auf, an den sich zu beiden Seiten jeweils ein konisch sich verjüngender Abschnitt 42 anschließt.

Bei Bewegung der Kolbenstange 3 in Zugrichtung (Zugbelastung) wird das in dem Zylinder 1 befindliche Hydrauliköl durch den Kolben 4 komprimiert. Das Hydrauliköl wird durch den zwischen dem zylindrischen Abschnitt 41 des Kolbens 4 und der Innenwand der Dämpferhülse 2 gebildeten Ringspalt 43 hindurchgepresst. Durch den axial sich in Richtung Verschlussstück 14 verjüngten konischen Abschnitt 42 ist das Einfließen des Hydrauliköls in den Ringspalt 43 unterstützt.

Bei Bewegung der Kolbenstange 3 in Druckrichtung ist der vorstehende Ablauf umgekehrt, wobei das in dem Zylinder 1 befindliche Hydrauliköl nun wiederum durch den Kolben 4 in Bewegungsrichtung komprimiert und durch den zwischen dem zylindrischen Abschnitt 41 des Kolbens 4 und der Innenwand der Dämpferhülse 2 gebildeten Ringspalt 43 hindurchgepresst wird.

Bei zunehmender Kolbengeschwindigkeit erhöht sich der Druck vor dem Kolben 4 weiter und das komprimierte Hydrauliköl drückt die Dämpferhülse 2 zusätzlich weiter nach außen in den Mantelspalt 15. Der dadurch erweiterte Ringspalt 43 lässt das Hydrauliköl besser abfließen und der Druck vor dem Kolben 4 wird reduziert. Durch den E-Modul Wert des Materials der Dämpferhülse 2 verhält sich diese wie ein Ventil, dass bei steigendem Druck vor dem Kolben 4 das Hydrauliköl leichter abfließen lässt und damit die auf den Kolben 4 einwirkenden Druckkräfte einstellt.

Bei zunehmender Belastung des Stoßdämpfers durch anhaltende Schwingungen und/oder durch Temperatureinfluss von außen erwärmt sich der Stoßdämpfer mit seinen aus unterschiedlichen Materialien gebildeten Kolben 4, Dämpferhülse 2 und dem eingesetzten Hydrauliköl.

Vorliegend besteht der Kolben 4 aus einem Kunststoff mit einem höheren Temperaturausdehnungskoeffizienten als die Dämpferhülse 2. Diese wiederum besteht aus einem Kunststoff mit einem hohen Elastzitätsmodul, aber mit einem geringeren Temperaturausdehnungskoeffizienten als der Kolben 4.

Bedingt durch das hohe Elastizitätsmodul des Materials der Dämpferhülse 2 verrichtet der Stoßdämpfer mit seinem Kolben 4 mehr Arbeit, die einen zusätzlichen Temperaturanstieg bewirkt. Aufgrund der höheren Arbeitstemperatur verringert sich die Viskosität des Hydrauliköls und die Fließgeschwindigkeit nimmt zu. Da der Kolben 4 sich aber bei Temperaturanstieg mehr ausdehnt als die Dämpferhülse 2, verringert sich der Ringspalt 43. Das Hydrauliköl fließt zwar temperaturbedingt schneller, wirkt aber gegen den verringernden Ringspalt 43. Der Stoßdämpfer bleibt dadurch bei einer gleichmäßigen Dämpfungskraft in einem weiträumigen Temperaturbereich.

Im Ausführungsbeispiel ist in dem Kolben 4 an seinen beiden axialen Seiten jeweils ein ringförmig ausgebildetes Druckausgleichselement 5 angeordnet. Alternativ kann dieses Druckausgleichselement auch lediglich an einer Seite angeordnet sein. Durch ein alternativ oder zusätzlich in den Mantelspalt 15 eingesetztes Druckausgleichselement 5 kann dem temperaturbedingten allgemeinen Innendruck durch Ausdehnung der Materialien von Zylinder 1, Kolben 4 und Dämpferhülse 2 sowie auch des Hydrauliköls entgegengewirkt werden.

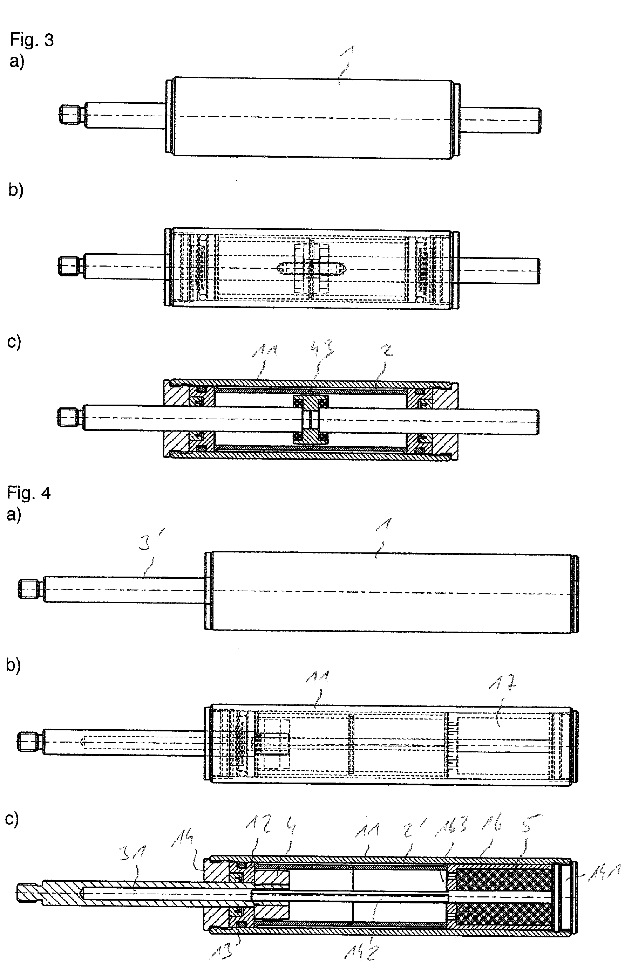

Im Ausführungsbeispiel gemäß Figur 4 ist das Zylinderrohr 11 des Zylinders 1 an einem Ende mit einem Dichtungs- und Führungspaket 12 verschlossen, das über einen O-Ring 13 gegenüber dem Zylinderrohr 11 abgedichtet ist. Das Dichtungs- und Führungspaket 12 ist über ein Verschlussstück 14 axial in dem Zylinderrohr 11 fixiert. Axial beabstandet zu dem Dichtungs- und Führungspaket 12 ist in dem Zylinderrohr 11 eine Anschlagplatte 161 angeordnet, die eine Druckausgleichskammer 17 begrenzt und in die umlaufend Durchbrüche 162 eingebracht sind. An seinem dem Dichtungs- und Führungspaket 12 gegenüberliegenden Ende ist das Zylinderrohr über ein zweites Verschlussstück 141 verschlossen. Im Ausführungsbeispiel ist die Anschlagplatte 161 Bestandteil eines Einschubbechers 16, der mit seinem offenen Ende an dem zweiten Verschlussstück 141 anliegt.

Zentrisch ist an dem zweiten Verschlussstück 141 eine Führungsstange 142 angeordnet, die durch eine zentrisch in die Anschlagplatte 161 eingebrachte Bohrung 163 geführt ist und in eine zentrisch in der Kolbenstange 3' angeordnete axiale Sackbohrung 31 eingreift. Zur Gewährleistung eines Hydrauliköl-Druckausgleichs in der Sackbohrung 31 ist in die Führungsstange 142 weiterhin eine - nicht dargestellte - Längsnut eingebracht.

Über die axiale Sackbohrung 31 ist die Kolbenstange 3' axial verschiebbar auf der Führungsstange 142 geführt. Außen ist die Kolbenstange 3' in dem Verschlussstück 14 geführt.

In die durch das Becherteil 16 begrenzte Druckausgleichskammer 17 ist ein Druckausgleichselement 5 eingebracht. Im Ausführungsbeispiel ist das Druckausgleichselement 5 im Wesentlichen zylindrisch ausgebildet und aus Moosgummi hergestellt.

Die Kolbenstange 3' ist in diesem Ausführungsbeispiel verkürzt ausgebildet und nicht durch den Zylinder 1 hindurch, sondern in diesen hineingeführt, wobei der Kolben 4 endseitig der Kolbenstange 3' angeordnet ist. Der Kolben 4 weist wiederum einen zylindrischen Abschnitt 41 auf, an den sich zu beiden Seiten jeweils ein konisch sich verjüngender Abschnitt 42 anschließt.

Das effektive Volumen des Zylinderrohrs 11 ist in diesem Ausführungsbeispiel gebildet durch die zwischen dem Dichtungs- und Führungspaket 12 und der Anschlagplatte 161 angeordnete Dämpferhülse 2' sowie dem Volumen der Druckausgleichskammer, die über die Durchbrüche 162 mit Innenvolumen der Dämpferhülse 2' verbunden ist. Die Dämpferhülse 2' ist in diesem Ausführungsbeispiel durch zwei miteinander verbundene Dämpferhülsenteile 22, 23 gebildet. In den Mantelspalt 15 hinter der Dämpferhülse 2' ist ein weiteres Druckausgleichselement 5 angeordnet.

Bei Bewegung der Kolbenstange 3' in Zugrichtung (Zugbelastung) wird das in der Dämpferhülse 2' befindliche Hydrauliköl durch den Kolben 4 komprimiert. Das Hydrauliköl wird durch den zwischen dem zylindrischen Abschnitt 41 des Kolbens 4 und der Innenwand der Dämpferhülse 2' gebildeten Ringspalt 43 hindurchgepresst. Durch den axial sich in Richtung Verschlussstück 14 verjüngten konischen Abschnitt 42 ist das Einfließen des Hydrauliköls in den Ringspalt 43 unterstützt.

Bei Bewegung der Kolbenstange 3' in Druckrichtung ist der vorstehende Ablauf geringfügig verändert. Das in der Dämpferhülse 2' befindliche Hydrauliköl wird nun durch Überdruck vor dem Kolben und durch Unterdruck hinter dem Kolben durch den zwischen dem zylindrischen Abschnitt 41 des Kolbens 4 und der Innenwand der Dämpferhülse 2' gebildeten Ringspalt 43 hindurchgepresst. Mit zunehmender Kolbengeschwindigkeit wird die Dämpferhülse 2'weiter nach au-ßen in den Mantelspalt 15 gepresst. Der dadurch erweiterte Ringspalt 43 ermöglicht ein widerstandsfreieres Abfließen des Hydrauliköls, wodurch der Druck vor dem Kolben 4 bzw. Unterdruck hinter dem Kolben 4 weiter reduziert wird. Die Dämpferhülse verhält sich auch hier wieder wie ein Ventil, das bei steigendem Druck das Hydrauliköl leichter abfließen lässt, wodurch eine Einstellung der auf den Kolben 4 einwirkenden Druckkräfte und damit der über den Kolben 4 an die Kolbenstange 3' weitergeleiteten Kräfte erzielt ist.

Bei zunehmender Belastung des Stoßdämpfers durch anhaltende Schwingungen und/oder durch Temperatureinfluss von außen erwärmt sich der Stoßdämpfer mit den aus unterschiedlichen Materialien hergestellten Kolben 4 und Dämpferhülse 2' sowie das Hydrauliköl, mit dem er befüllt ist.

Auch in diesem Ausführungsbeispiel besteht der Kolben 4 aus einem Kunststoff mit einem höheren Temperaturausdehnungskoeffizienten als die Dämpferhülse 2'. Diese wiederum besteht aus einem Kunststoff mit einem hohen Elastizitätsmodul, aber mit einem geringeren Temperaturausdehnungskoeffizienten als der Kolben 4. Bedingt durch das hohe Elastizitätsmodul verrichtet der Stoßdämpfer mehr Arbeit, die einen weiteren Temperaturanstieg bewirkt. Aufgrund der höheren Arbeitstemperatur verringert sich die Viskosität des Hydrauliköls und die Fließgeschwindigkeit nimmt zu. Da der Kolben 4 sich aber bei Temperaturanstieg mehr ausdehnt als die Dämpferhülse 2', verringert sich der Ringspalt 43. Das Hydrauliköl fließt zwar temperaturbedingt schneller, wirkt aber gegen den verringernden Ringspalt 43. Der Stoßdämpfer bleibt dadurch bei einer gleichmäßigen Dämpfungskraft in einem weiträumigen Temperaturbereich.

Um die Verdrängung des Kolbenstangenvolumens bei Einführung in den Zylinder und dem temperaturbedingten allgemeinen Innendruck durch Ausdehnung der eingebauten Materialien und des Hydrauliköls entgegenzuwirken, ist eine Druckkammer 16 angeordnet, in die ein Druckausgleichselement 5 eingebracht ist. Darüber hinaus ist ein weiteres Druckausgleichselement 5 in dem Mantelspalt 15 angeordnet.

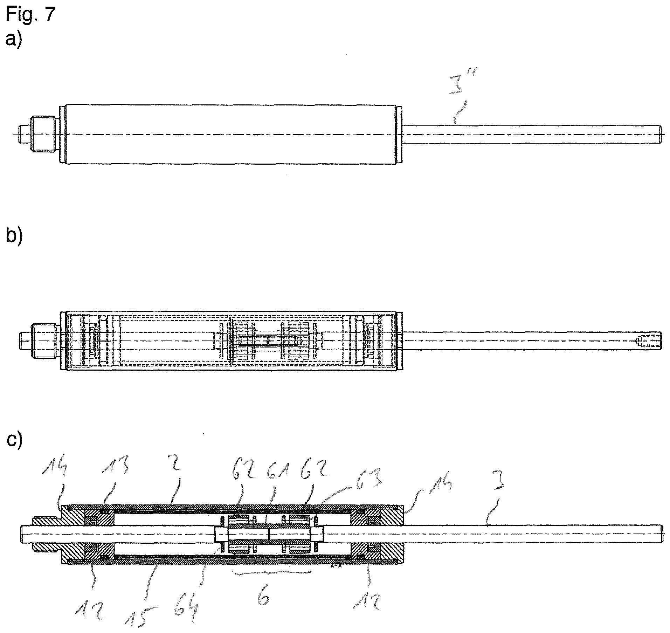

Der als weiteres Ausführungsbeispiel gemäß Figur 7 gewählte Stoßdämpfer umfasst eine Kolbenstange 3", auf der ein Kolbenmodul 6 angeordnet ist, das aus zwei über ein Distanzstück 61 miteinander verbundenen Kolben 62 gebildet ist, die mit Axialbohrungen 63 versehen sind und an deren jeweils nach außen gerichteter Seite eine Verschlussscheibe 64 auf der Kolbenstange 3" axial verschiebbar gelagert ist.

Der Zylinder 1 umfasst entsprechend dem ersten Ausführungsbeispiel ein Zylinderrohr 11, das an beiden Enden jeweils mit einem Dichtungs- und Führungspaket 12 verschlossen ist, das über einen O-Ring 13 gegenüber dem Zylinderrohr 11 abgedichtet ist. Die Dichtungs- und Führungspakete 12 sind jeweils über ein Verschlussstück 14 axial in dem Zylinderrohr 11 fixiert. Zwischen den beidseitig angeordneten Dichtungs- und Führungspaketen 12 ist wiederum die Dämpferhülse 2 in dem Zylinderrohr 11 axial gehalten.

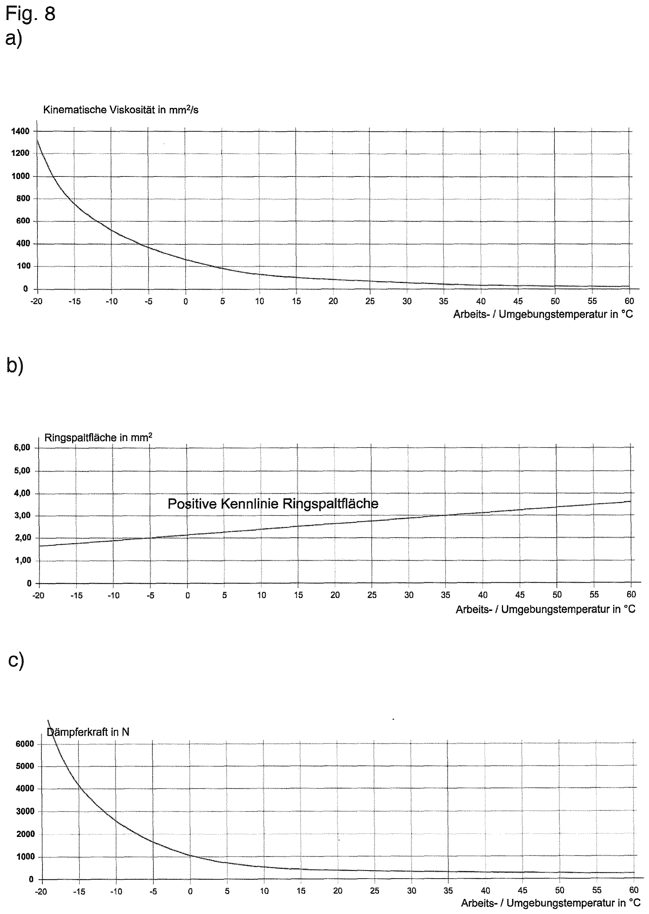

Anhand der Figuren 8 bis 10 wird nachfolgend die Möglichkeiten der Einstellung dieses erfindungsgemäßen Stoßdämpfers durch Versuche mit Variation des Dämpfer- und Kolbenmaterials beschrieben:
Zunächst sind in einem ersten Versuch die Kolben 62 des Kolbenmoduls 6 aus Aluminium, vorliegend AL6061 hergestellt. AL6061 hat einen Wärmeausdehnungskoeffizienten von 24 × 10⁻⁶ / K. Der Außendurchmesser der Kolben 62 beträgt jeweils 20,00 mm.

Die Dämpferhülse 2 ist aus Polyamid, vorliegend aus PA6GF30 hergestellt. PA6GF30 hat einen Wärmeausdehnungskoeffizienten von 60 × 10⁻⁶ / K. Der Innendurchmesser der Dämpferhülse 2 beträgt 20.08 mm. Als Fluid ist Hydrauliköl, vorliegend HVLP32 eingesetzt.

In Figur 8 a) ist die kinematische Viskosität des Hydrauliköls in [mm²/s] über die Arbeitstemperatur in [°C] aufgetragen. Figur 8 b) zeigt die sich ergebende positive Kennlinie der Ringspaltfläche, das ist die dem Ringspalt 43 entsprechende Fläche des Spaltes zwischen Kolben 62 und Dämpferhülse 2. In Figur 8 c) ist die Dämpferkraft des Stoßdämpfers in [N] in Abhängigkeit der Viskosität und des unterschiedlich gewählten Kolben- und Dämpferhülsenmaterials gezeigt.

Im zweiten Versuch sind bei identischen Maßen sowohl die Kolben, als auch die Dämpferhülse aus PA6GF30 hergestellt.

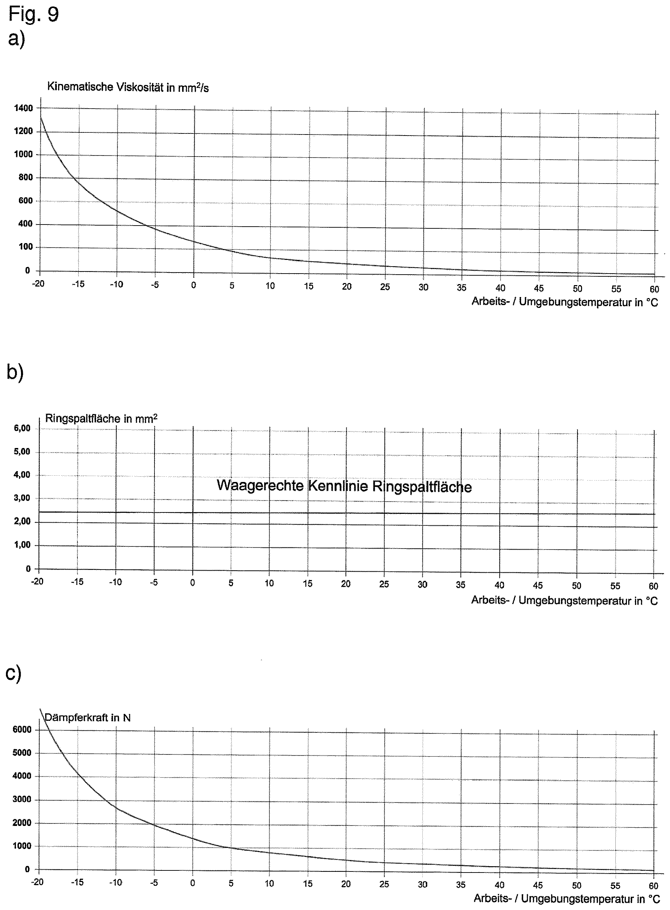

In Figur 9 a) ist wiederum die kinematische Viskosität des Hydrauliköls in [mm²/s] über die Arbeitstemperatur in [°C] aufgetragen. Es zeigt sich erwartungsgemäß keine Änderung. Wie in Figur 9 b) gezeigt, ergibt sich hier eine waagerechte Kennlinie der Ringspaltfläche. Weiterhin zeigt sich, wie in Figur 9 c) wiedergegeben, ein steilerer Verlauf der Dämpferkraft des Stoßdämpfers.

Betrug diese im ersten Versuch bei 0°C etwa 1000 N, so stellt sich hier bei dem zweiten Versuch eine Dämpferkraft von ca. 1.250 N ein.

Im dritten Versuch sind die Kolben 62 des Kolbenmoduls 6 aus PA66 hergestellt. PA66 hat einen Wärmeausdehnungskoeffizienten von 120 × 10⁻⁶ / K. Die Dämpferhülse 2 ist wiederum aus PA6GF30 hergestellt. Die Abmaße von Kolben 62 und Dämpferhülse 2 sind unverändert.

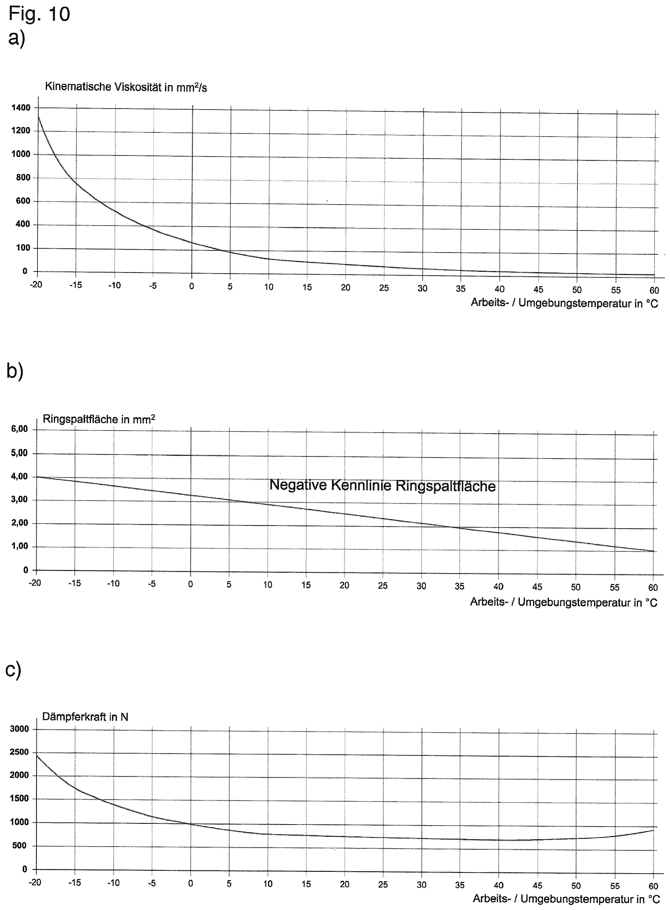

Erwartungsgemäß ist die kinematische Viskosität des Hydrauliköls in [mm²/s] über die Arbeitstemperatur in [°C] wiederum unverändert (Figur 10 a). Wie aus Figur 10 b) ersichtlich, ergibt sich nun eine negative Kennlinie der Ringspaltfläche. Die Dämpferkraft sinkt, wie Figur 10 c) zu entnehmen ist, ab 0°C nur noch moderat ab und weist etwa zwischen 10°C und 50°C einen nahezu konstanten Verlauf auf.

Es zeigt sich, dass durch die Wahl eines Dämpferhülsenwerkstoffs mit einem doppelten Wärmeausdehnungskoeffizienten gegenüber dem Kolbenwerkstoff eine nahezu konstante Dämpferkraft des Stoßdämpfers in einem großen Temperaturbereich zu erzielen ist. Durch die gezielte Werkstoffpaarung von Kolben und Dämpferhülse mit unterschiedlichen Wärmeausdehnungskoeffizienten lässt sich dieser Bereich weiter verschieben und/oder erweitern.

Für den erfindungsgemäßen Stoßdämpfer ergeben sich zusammenfassend insbesondere zwei Stellgrößen zur Einstellung des Dämpfungsverhaltens: Das Elastizitätsmodul des Kunststoffwerkstoffs der Dämpferhülse 2 und die Wärmeausdehnungskoeffizienten bzw. die Differenz der Wärmeausdehnungskoeffizienten der Werkstoffe von Dämpferhülse 2 und Kolben 4, 62.

## Patentansprüche

1. Stoßdämpfer, umfassend einen mit einem Fluid befüllten Zylinder (1) und eine in diesem geführten Kolbenstange (3), wobei die Kolbenstange (3) in den Zylinder (1) hinein oder durch ihn hindurchgeführt ist und mit wenigstens einem Kolben (4, 62) versehen ist, **dadurch gekennzeichnet, dass** in dem Zylinder (1) den wenigstens einen Kolben (4, 62) umgebend wenigstens eine Dämpferhülse (2) angeordnet ist, deren Außendurchmesser kleiner ist, als der Innendurchmesser des Zylinders (1) und deren Innendurchmesser größer ist, als der Außendurchmesser des wenigstens einen Kolbens (4, 62), wodurch zwischen dem wenigstens einen Kolben (4, 62) und der wenigstens einen Dämpferhülse (2) ein Ringspalt gebildet ist und zwischen der wenigstens einen Dämpferhülse (2) und dem Zylinder (1) ein Mantelspalt gebildet ist, wobei wenigstens eine der wenigstens einen Dämpferhülse (2) aus Kunststoff hergestellt ist.

2. Stoßdämpfer nach Anspruch 1, **dadurch gekennzeichnet, dass** der wenigstens eine Kolben (4, 62) und die Dämpferhülse (2) aus Werkstoffen mit unterschiedlichem Wärmeausdehnungskoeffizienten ausgebildet sind.

3. Stoßdämpfer nach Anspruch 1 oder 2, **dadurch gekennzeichnet, dass** die wenigstens eine Dämpferhülse (2) und/oder der wenigstens eine Kolben (4, 62) aus Kunststoff, vorzugsweise aus einem thermoplastischen Kunststoff hergestellt ist.

4. Stoßdämpfer nach Anspruch 3, **dadurch gekennzeichnet, dass** der wenigstens eine Kolben (4, 62) und/oder die wenigstens eine Dämpferhülse (2) aus Polyamid, vorzugsweise aus glasfaserverstärktem Polyamid hergestellt ist.

5. Stoßdämpfer nach einem der Ansprüche 2 bis 4 **dadurch gekennzeichnet, dass** der wenigstens eine Kolben (4, 62) aus Metall, vorzugsweise aus Aluminium und die Dämpferhülse (2) aus Kunststoff, vorzugsweise aus Polyamid hergestellt ist.

6. Stoßdämpfer nach einem der vorgenannten Ansprüche, **dadurch gekennzeichnet, dass** in den wenigstens einen Kolben (62) umlaufend radial beabstandet zu der Kolbenstange (3) Axialbohrungen (63) eingebracht sind, wobei an wenigstens einer Außenseite des wenigstens einen Kolbens (62) eine Verschlussscheibe (64) zum Verschließen der Axialbohrungen (63) auf der Kolbenstange (3) axial beweglich gelagert ist.

7. Stoßdämpfer nach einem der vorgenannten Ansprüche, **dadurch gekennzeichnet, dass** das Fluid Hydrauliköl, vorzugsweise vom Typ HVLP, oder Silikonöl ist.

8. Stoßdämpfer nach einem der vorgenannten Ansprüche, **dadurch gekennzeichnet, dass** in dem zwischen dem Zylinder (1) und der wenigstens einen Dämpferhülse (2) gebildeten Mantelspalt (15) wenigstens ein Druckausgleichselement angeordnet ist und/oder wobei der Mantelspalt (15) über wenigstens eine Durchlassöffnung mit dem Fluid beaufschlagbar ist.

9. Stoßdämpfer nach einem der vorgenannten Ansprüche, **dadurch gekennzeichnet, dass** in dem Zylinder (1) eine Druckausgleichskammer (17) vorhanden ist, die mit dem Fluid in Kontakt ist und in der ein Druckausgleichselement (5) angeordnet ist.

10. Stoßdämpfer nach einem der vorgenannten Ansprüche, **dadurch gekennzeichnet, dass** auf der Kolbenstange (3) beabstandet zueinander zwei Kolben (62) vorhanden sind, zwischen denen ein Druckausgleichselement angeordnet ist.

11. Stoßdämpfer nach einem der Ansprüche 9 bis 11, **dadurch gekennzeichnet, dass** das wenigstens eine Druckausgleichselement aus Elastomerschaum, Moosgummi oder Zellkautschuk hergestellt ist.
